# FASCICULE DE BREVET EUROPEEN

(11) **EP 3 619 765 B1**
(45) Date de publication et mention de la délivrance du brevet: **29.03.2023**
(21) Numéro de dépôt: 18728926.9
(22) Date de dépôt: 03.05.2018
(51) Int. Cl.: H01M 8/2418, H01M 8/2404

(54) **DISPOSITIF DE MANIPULATION DE MEMBRANES**
VORRICHTUNG ZUR MANIPULATION VON MEMBRANEN
DEVICE FOR MANIPULATING MEMBRANES

(30) Priorité: 03.05.2017 FR 1753909
(43) Date de publication de la demande: 11.03.2020
(73) Titulaire: Commissariat à l'Énergie Atomique et aux Énergies Alternatives, 75015 Paris (FR)
(72) Inventeur: BUVAT, Pierrick, 37250 Montbazon (FR); CARRIERE, Stéphane, 37510 Villandry (FR); CHAZOT, Laurent, 37300 Joue-Les-Tours (FR); SERRE, Jérôme, 84120 Pertuis (FR); BOUGY, Jean-Jacques, 78890 Garancieres (FR)
(74) Mandataire: Ernest Gutmann - Yves Plasseraud S.A.S.
(86) Numéro de dépôt international: PCT/FR2018/051109
(87) Numéro de publication internationale: WO 2018/203008

(56) Documents cités:
- JP-A- 2007 287 436
- KR-A- 20150 019 271
- US-A1- 2004 042 789
- US-A1- 2016 365 598

## Description

### DOMAINE

La présente invention concerne le domaine des dispositifs d'assemblage membrane / électrodes pour pile à combustible.

### CONTEXTE

Les piles à combustible à membrane d'échange de protons, dites PEMFC correspondant à l'acronyme anglais de « proton exchange membrane fuel cells » ou « polymer electrolyte membrane fuel cells », présentent des propriétés de compacité particulièrement intéressantes. Chaque cellule comprend une membrane électrolyte polymère permettant seulement le passage de protons et non le passage des électrons. La membrane est mise en contact avec une anode sur une première face et avec une cathode sur une deuxième face pour former un assemblage membrane/électrodes dit AME.

L'assemblage précité est généralement réalisé par superposition successive des différentes membranes et électrodes avec une interposition de membranes de renfort permettant de supporter l'assemblage. Toutefois, la préhension par un bras de manipulateur de membranes aisément déformables peut s'avérer difficile à réaliser et l'est d'autant plus que l'épaisseur des membranes d'un assemblage AME est de l'ordre de la centaine de micromètres. De plus, la préhension par un manipulateur de la membrane supérieure sur un empilement de membranes s'avère très difficile à réaliser puisque la liaison mécanique réalisée à l'instant de la préhension de la membrane est une liaison rigide qui peut induire des contraintes mécaniques fortes sur le bras pour assurer un bon contact avec la membrane à saisir.

JP 2007 287436 A divulgue un dispositif de manipulation de membranes, en particulier pour pile à combustible, comprenant un poste de stockage de membranes et des moyens de convoyage et de manipulation d'une membrane depuis le poste de stockage jusque vers un poste de réception, les moyens de convoyage et de manipulation comprennent des moyens de préhension à aspiration et le poste de stockage de membranes comprend un magasin de stockage par empilement de membranes.

### RESUME DE L'INVENTION

La présente invention concerne tout d'abord un dispositif de manipulation de membranes pour pile à combustible comprenant un poste de stockage de membranes et des moyens de convoyage et de manipulation d'une membrane depuis le poste de stockage jusque vers un poste de réception, caractérisé en ce que les moyens de convoyage et de manipulation comprennent des moyens de préhension à aspiration et en ce que le poste de stockage de membranes comprend un magasin de stockage par empilement de membranes qui est guidé à déplacement selon une direction donnée sur un bâti fixe portant des moyens d'amortissement et de rappel du magasin dans une position prédéterminée en l'absence de force d'appui exercée sur le magasin selon ladite direction par les moyens de préhension à aspiration.

Selon l'invention, lors de la préhension à aspiration d'une membrane, la liaison mécanique réalisée n'est pas totalement statique puisqu'un mouvement du magasin de stockage et de support des membranes peut s'opérer dans la direction donnée qui est de préférence une direction verticale correspondant à une direction d'empilement des membranes dans le magasin.

Selon une caractéristique du dispositif, les moyens de préhension à aspiration comprennent un cadre comportant une pluralité d'orifices débouchant sur une face plane de préhension du cadre, ces orifices étant reliés aux moyens de fourniture d'une dépression.

L'utilisation d'un cadre permet d'assurer une préhension uniforme de la membrane sur une surface importante de celle-ci, facilitant d'autant sa manipulation. De plus, les orifices peuvent être réalisés à la dimension souhaitée et permettent une répartition de ceux-ci sur une grande surface, ce qui serait au contraire plus difficile à réaliser avec des ventouses.

Selon encore une autre caractéristique, les moyens de convoyage et de manipulation peuvent comprendre un manipulateur comprenant un segment de liaison de deux articulations à rotation dont l'une porte les moyens de préhension à aspiration.

Dans une réalisation, les moyens d'amortissement et de rappel comprennent un levier dont un point de pivot porté par un bâti fixe sépare d'un côté un contrepoids et de l'autre côté une tige de liaison rigide au magasin qui est orientée selon ladite direction.

De préférence, le bâti comprend un plateau fixe comportant une ouverture dans laquelle la tige de liaison est guidée à déplacement selon ladite direction et en ce que le plateau est intercalé selon ladite direction entre le magasin et le levier.

Enfin, le dispositif peut comprendre des moyens de guidage auxiliaire à déplacement selon ladite direction du magasin sur le plateau.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- la figure 1 est une illustration schématique d'un premier assemblage électrode-membrane électrolyte polymère-électrode destiné à être réalisé avec une installation selon l'invention ;
- la figure 2 est une illustration schématique d'un second assemblage électrode-membrane électrolyte polymère-électrode destiné à être réalisé avec une installation selon l'invention ;
- la figure 3 est vue schématique en perspective de l'installation selon l'invention ;
- la figure 4 est une autre vue schématique en perspective de l'installation selon l'invention ;
- la figure 5 est une représentation schématique de l'installation selon l'invention ;
- la figure 6 est une vue schématique en perspective de face de plusieurs postes de l'installation selon l'invention, notamment d'un poste d'empilement et de deux postes de stockage de membranes agencés de part et d'autre dudit poste d'empilement ;
- les figures 7 et 8 sont des vues schématique en perspective similaire à la figure 6 et selon deux angles de vue différents ;
- la figure 9 est une vue schématique en perspective du poste d'empilement et des moyens de solidarisation d'un empilement ;
- la figure 10 est une vue schématique en perspective et isolée des moyens de solidarisation ;
- la figure 11 est une vue schématique en perspective d'un premier poste de stockage de membranes électrodes ;
- la figure 12 est une vue schématique en perspective d'un premier manipulateur des membranes électrodes ;
- la figure 13 est une vue schématique en perspective du premier poste et d'un manipulateur d'intercalaires ;
- la figure 14 est une vue schématique en perspective d'un deuxième poste de stockage de membranes renfort ;
- la figure 15 est une vue schématique en perspective d'un deuxième manipulateur de membranes renfort ;
- la figure 16 est une vue schématique en perspective d'un troisième manipulateur monté sur un rail longitudinal de déplacement ;
- la figure 17 est une vue schématique en perspective isolée du troisième manipulateur de la figure 16 ;
- les figures 18 à 21 représentent les étapes de réalisation d'un premier empilement de membranes ;
- les figures 22 à 24 représentent les étapes de réalisation d'un second empilement de membranes ;
- la figure 25 est une illustration d'un mode d'empilement de membranes aux fins d'obtention de l'assemblage représenté en figure 1 ;
- la figure 26 est une illustration schématique des contours des éléments de la figure 25 ;
- la figure 27 est une illustration d'un mode d'empilement de membranes aux fins d'obtention de l'assemblage représenté en figure 2.

### DESCRIPTION DETAILLEE

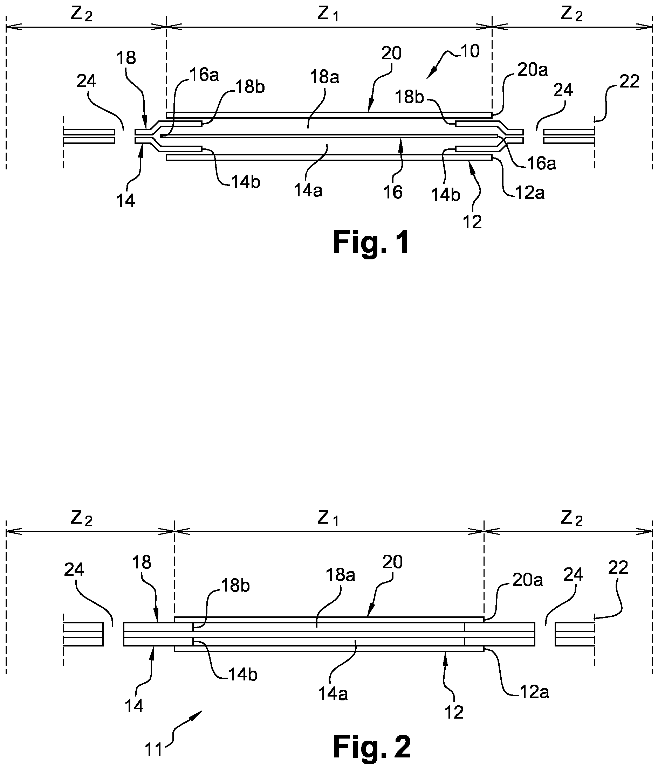

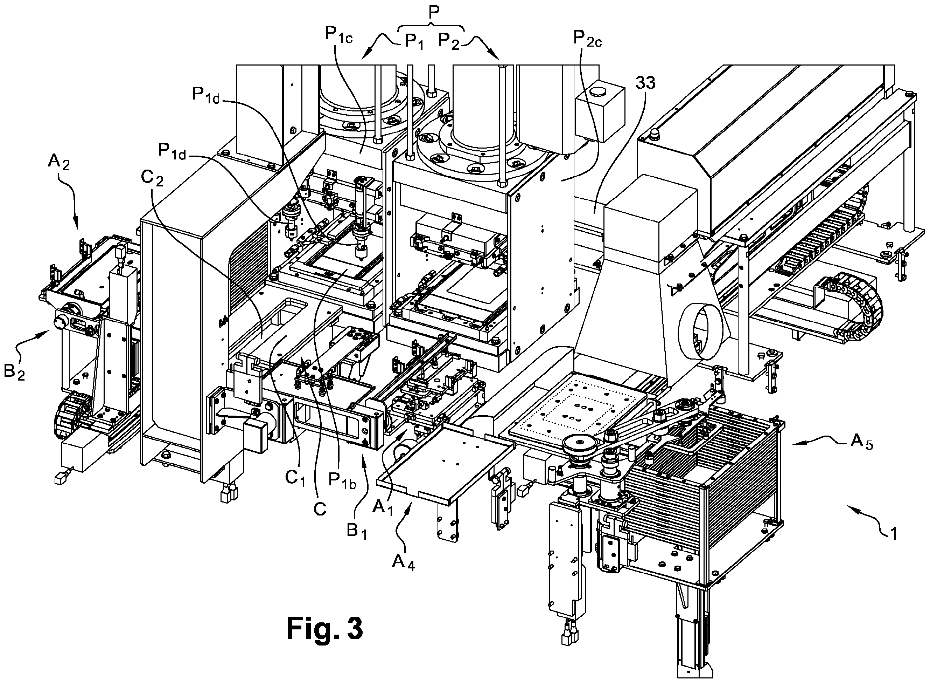

On se réfère tout d'abord à la figure **1** qui représente un assemblage **10** membrane électrolyte polymère/électrodes dit AME, destiné à être obtenu avec l'installation décrite en référence aux figures **3** et suivantes, et comprenant les éléments successifs du bas vers le haut :
- une première électrode **12** ou électrode inférieure apte à former une anode dans une pile à combustible,
- une première membrane **14** ou membrane inférieure de renfort comprenant un bord interne **14b** délimitant une ouverture **14a** obturée inférieurement par la première électrode **12,** le bord externe **12a** de la première électrode **12** étant en contact avec le bord interne **14b** de la première membrane renfort **14,**
- une membrane électrolyte polymère **16** assurant une conduction protonique,
- une seconde membrane **18** ou membrane supérieure de renfort comprenant un bord interne **18b** délimitant une ouverture **18a,**
- une seconde électrode **20** ou électrode supérieure apte à former une cathode dans une pile à combustible et obturant supérieurement l'ouverture **18a** de la membrane **18** supérieure de renfort, le bord externe **20a** de la seconde électrode **20** étant en contact avec le bord interne **18b** de la seconde membrane renfort **18.**

Chaque membrane électrode **12, 20** comprend une première couche et une seconde couche distinctes l'une de l'autre. La première couche est une couche de diffusion formée d'un tissu de carbone sur laquelle est déposée la seconde couche catalytique comprenant un liant incorporant un catalyseur tel que du platine. Dans l'agencement représenté, la seconde couche catalytique est agencée au contact de la membrane électrolyte polymère **16.**

On comprend que sur la figure **1****,** les différentes couches précitées sont en contact les unes avec les autres et que les espacements entre lesdites couches n'existent pas dans un assemblage réel. Ainsi, l'assemblage membrane/électrodes est dépourvu d'espaces ou cavités à l'intérieur de celui-ci. En pratique, la première électrode 12 et la seconde électrode 20 sont chacune en contact avec la membrane électrolyte polymère 16. Comme cela est bien visible sur cette figure, la membrane électrolyte polymère **16** présente un bord externe **16a** qui est appliqué :
- supérieurement sur le bord interne **14b** de la première membrane renfort **14** de manière à obturer supérieurement son ouverture **14a,**
- inférieurement sur le bord interne **18b** de la seconde membrane renfort **18** de manière à obturer supérieurement son ouverture **18a.**

Ainsi, la membrane électrolyte polymère **16** est intégralement logée entre les première **14** et seconde **18** membranes renfort et réalise ainsi un isolement de la membrane électrolyte polymère d'avec les passages de liquide de refroidissement et de gaz purs. Ce type de montage est connu sous le nom anglais de « anti-wicking ». Plus précisément, l'assemblage présenté en figure **1** comprend une découpe périphérique **22** à contour fermé formant un contour externe de l'assemblage **10** membrane électrolyte - électrodes - membranes renfort. L'assemblage **10** comprend également des orifices **24** entre ladite découpe périphérique **22** et le bord externe **16a** de la membrane électrolyte polymère **16,** ces orifices **24** étant destinés au passage de liquide de refroidissement et de gaz purs (H₂ et O₂). Autrement dit, ces orifices **24** sont formés dans une zone périphérique entourant la membrane électrolyte polymère **16** et les première **12** et seconde **20** électrodes.

La figure **2** représente un second assemblage **11** pouvant être réalisé avec l'installation décrite ci-après. L'empilement des différentes membranes est identique à ce qui a été décrit en référence à la figure **1****.** Toutefois, l'assemblage représenté sur cette figure ne réalise pas de fonction « anti-wicking » c'est-à-dire dans laquelle la membrane électrolyte polymère n'est pas confinée entre les première **14** et seconde **18** membrane renforts comme expliqué en référence à la figure 1 mais s'étend partout entre la première membrane renfort **14** et la seconde membrane renfort **18.** En pratique, seule la membrane électrolyte polymère **16** diffère par rapport à l'assemblage **10** décrit en référence à la figure **1****.**

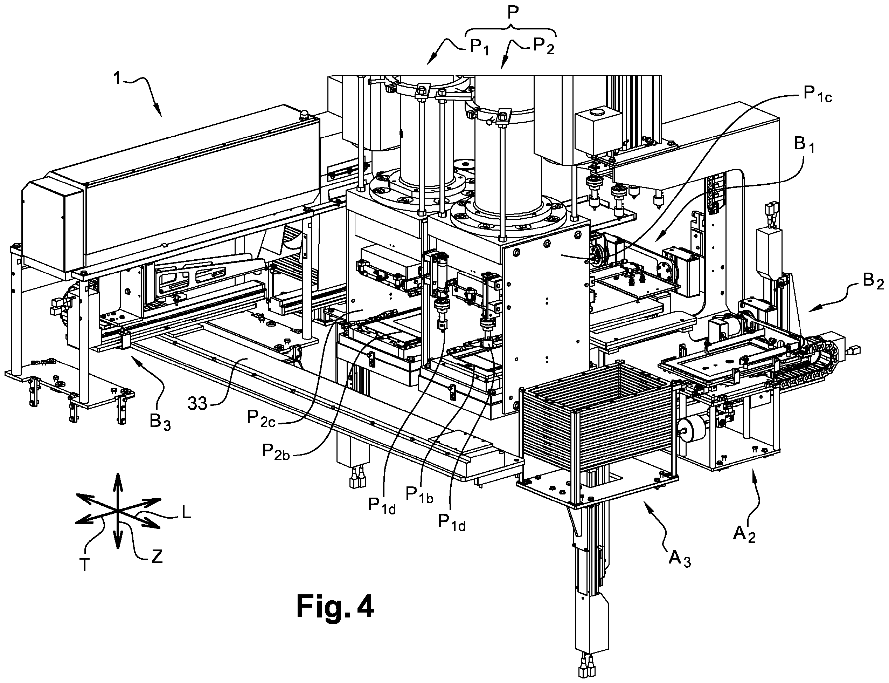

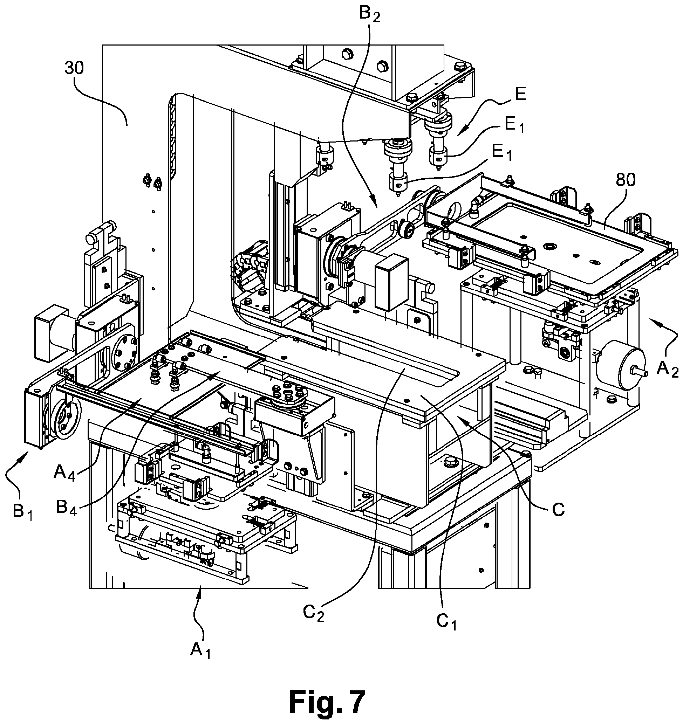

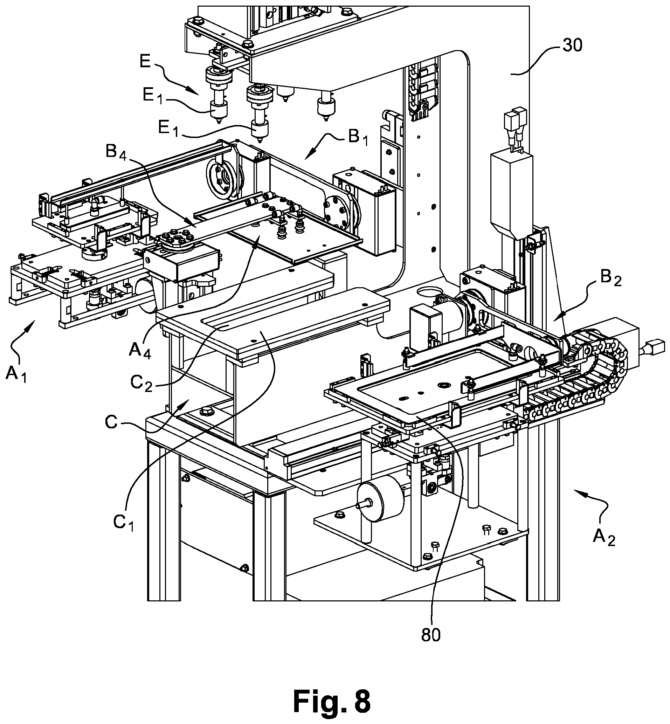

On se réfère maintenant aux figures **3** à **8** qui représentent une installation selon l'invention, la figure 8 étant une représentation graphique de l'installation représentée aux figures **3** à **7****.** Les différentes unités de l'installation seront maintenant décrites les unes à la suite des autres et positionnées les unes relativement aux autres selon trois directions perpendiculaires de l'espace deux à deux perpendiculaires, à savoir deux directions horizontales dont l'une est une direction longitudinale **L** et l'autre une direction transverse **T,** et une direction verticale **Z.**

L'installation **1** représentée aux figures **3****,** **4** et **5** comprend :
- un premier poste **A₁** de stockage de membrane électrodes **12, 20,**
- un deuxième poste **A₂** de stockage de membrane renfort,
- un troisième poste **A₃** de stockage de membrane support,
- un quatrième poste **A₄** de stockage de feuilles intercalaires intercalées entre deux membranes électrodes **12, 20** successives du premier poste **A₁** de stockage de membranes électrodes **12, 20,**
- un cinquième poste **A₅** de stockage d'un assemblage final membrane électrolyte polymère - membrane électrodes - membranes renfort tel que décrit en référence aux figures **1** et **2****,**
- un sixième poste **A₆** de stockage ou de récupération des déchets de membranes,
- un poste d'empilement **C** ou poste de réception des membranes des premier **A₁** et deuxième **A₂** postes de stockage,
- un poste de pressage et de chauffage **P** d'un assemblage de membranes,
- un poste de découpe **D** d'un assemblage **10, 11** tel que décrit en référence aux figures **1** et **2****,**
- des moyens de convoyage et de manipulation des membranes du premier poste **A₁**, du second poste **A₂** et du troisième poste **A₃**, d'un empilement du poste d'empilement **C**, d'un assemblage du poste **P** de pressage et de chauffage et du poste de découpe **D.**

Les moyens de convoyage et de manipulation comprennent une pluralité de manipulateurs au nombre de cinq dans la réalisation représentée aux figures. Chaque manipulateur comprend des moyens de prise et de pose d'une membrane ou d'une pluralité de membranes solidaires les unes des autres.

Un premier manipulateur **B₁** est configuré pour permettre un déplacement d'une membrane électrode depuis le premier poste de stockage **A₁** jusqu'au poste d'empilement **C.** Un second manipulateur **B₂** est configuré pour permettre un déplacement d'une membrane renfort **14, 18** depuis le deuxième poste de stockage **A₂** jusqu'au poste d'empilement **C.** Un troisième manipulateur **B₃** est configuré pour permettre un déplacement d'une membrane support depuis le troisième poste de stockage **A₃** jusqu'au poste **P** de pressage et de chauffage. Un quatrième manipulateur **B₄** est configuré pour permettre un déplacement d'une feuille intercalaire depuis le premier poste de stockage **A₁** jusque vers le quatrième poste de stockage de feuilles intercalaires. Un cinquième manipulateur **B₅** est configuré pour permettre un déplacement d'un assemblage final depuis le poste de découpe **D** vers le cinquième poste **A₅** de stockage des assemblages **10, 11** et le déplacement des déchets de membranes du poste de découpe **D** vers le sixième poste **A₆** de stockage.

L'installation **1** comprend également des moyens de solidarisation **E** d'un empilement réalisé au niveau du poste d'empilement **C.**

Le poste **P** de pressage et de chauffage comprend deux presses **P₁**, **P₂** agencées côte à côte en direction longitudinale. Les presses **P₁** et **P₂** comprennent chacune un piston **P₁ₐ**, **P₂ₐ** agencé à déplacement en direction vertical en vis-à-vis d'un support de presse **P_{1b}**, **P_{2b}**, les pistons et support de presse étant portés par un bâti **P_{1c}**, **P_{2c}** de presse. La première presse **P₁** permet d'assurer un pressage, un chauffage et un refroidissement contrôlés de la zone **Z₁** d'empilement électrode inférieure - membrane électrolyte polymère - électrode supérieure, cette zone **Z₁** étant représentée sur les figures **1** et **2****.** Cette zone **Z₁** comprend l'intégralité des électrodes et de préférence uniquement celles-ci. La seconde presse **P₂** permet d'assurer un pressage, un chauffage et un refroidissement contrôlés d'une zone **Z₂** d'empilement de membranes qui est annulaire et entoure les électrodes. Cette zone **Z₂** étant représentée sur les figures **1** et **2****.** Cette zone **Z₁** comprend l'intégralité des électrodes et de préférence uniquement celles-ci.

Le bâti **P_{1c}** de la presse **P₁** porte des moyens de solidarisation des membranes comprenant dans le cas présent des poinçons **P_{1d}** chauffants destinés à être appliqués sur les membranes.

Comme cela est bien visible sur les figures, le poste d'empilement **C** est disposé longitudinalement entre le premier poste de stockage **A₁** et le second poste de stockage **A₂.** Le poste **P** de pressage et de chauffage est ici agencé dans la direction transverse **T** entre le poste d'empilement **C** et un rail longitudinal **33** permettant le déplacement longitudinal du troisième manipulateur **B₃.** On comprendra ultérieurement l'intérêt de cet agencement en relation avec un support **P_{1b}** de la presse **P₁** qui est accessible dans les deux sens de la direction transverse afin de permettre l'amenée d'un ensemble de membranes depuis le poste d'empilement **C** dans un premier sens de la direction transverse **T** sur le support **P_{1b}** de la presse **P₁** et d'une membrane support par le manipulateur **B₃,** en fin de déplacement, dans le second sens de la direction transverse **T,** permettant ainsi de disposer d'une installation **1** de dimensions réduites.

Le poste **P de** pressage et de chauffage est agencé longitudinalement entre le poste de découpe **D** et le troisième poste **A₃** de stockage, ce dernier poste **A₃** étant agencé transversalement en vis-à-vis du second poste **A₂** de stockage. Egalement, le poste d'empilement **C** est intercalé longitudinalement entre le premier poste **A₁** de stockage et le second poste **A₂** de stockage.

Le poste **E** de découpe d'un assemblage **10, 11** tel que décrit en référence aux figures **1** et **2****,** peut comprendre des moyens laser confinés à l'intérieur d'une hotte d'aspiration des fumées générées par la découpe périphérique **22** et des orifices **24.**

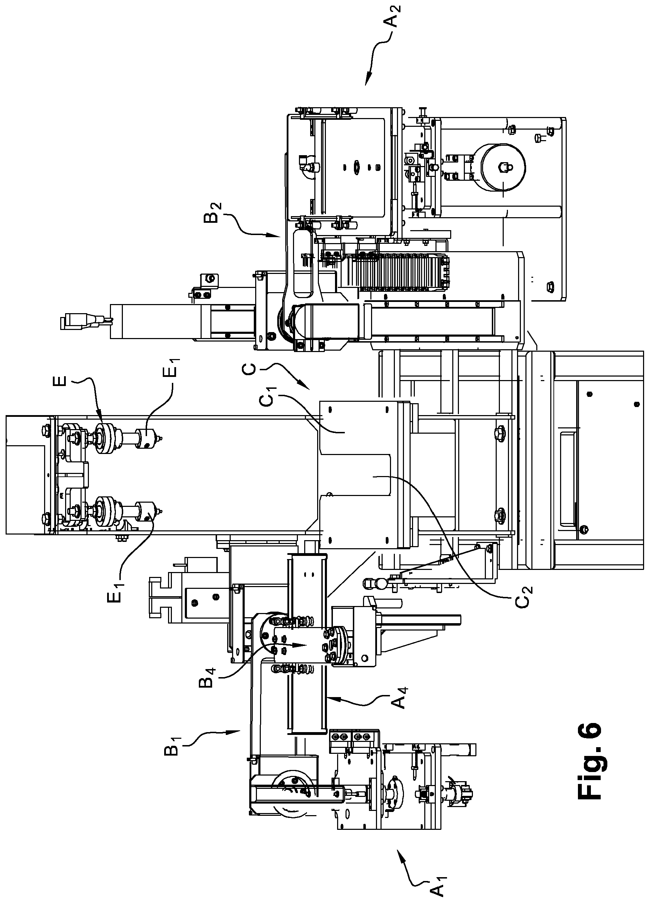

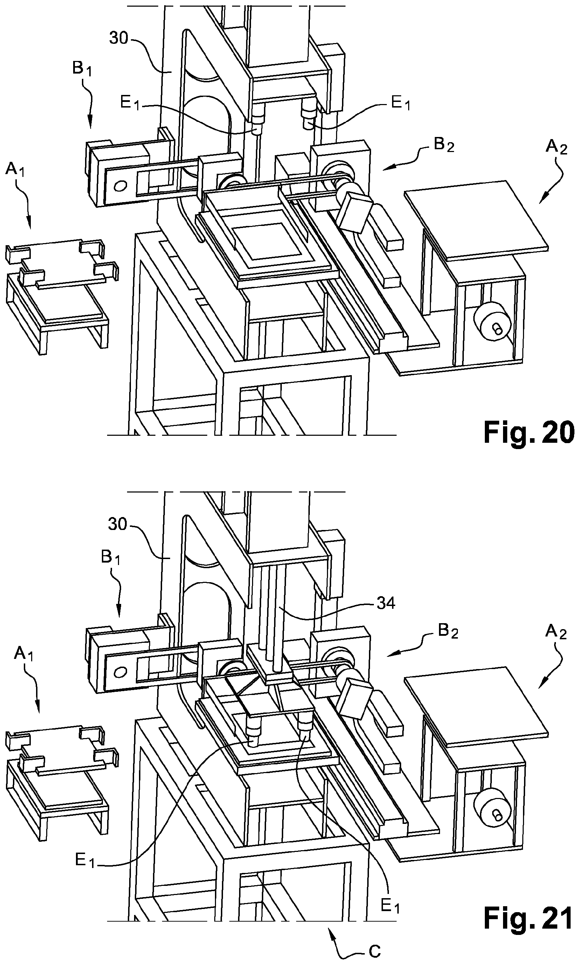

On se réfère maintenant aux figures **6** à **8** qui représentent une vue schématique en perspective du poste d'empilement **C**, du premier poste **A₁** de stockage, du second poste **A₂** de stockage et du quatrième poste **A₄** de stockage. Le poste d'empilement **C** comprend un plateau **C₁** comprenant une ouverture **C₂** ayant plus précisément la forme d'une échancrure en U dont la fonction apparaitra clairement ultérieurement dans la description effectuée en relation avec les figures **21** à **24** montrant la réalisation d'un premier empilement selon l'invention. Sur ces figures **6** à **8****,** sont ainsi bien visibles le premier manipulateur **B₁**, le second manipulateur **B₂** ainsi que le quatrième manipulateur **B₄.**

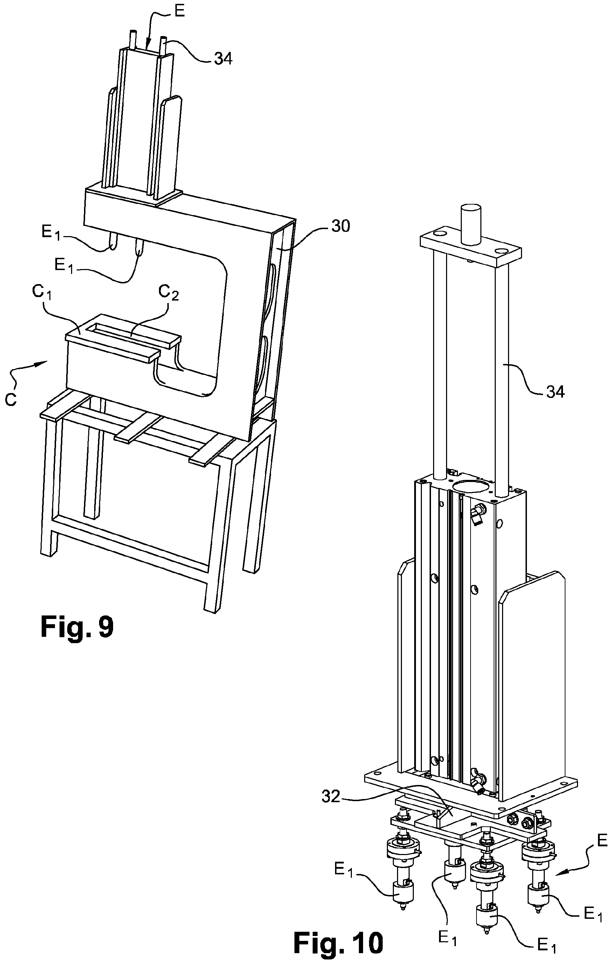

Les figures **9** et **10** représentent de manière isolée le poste d'empilement **C** comprenant le plateau **C₁** d'empilement et les moyens de solidarisation **E.** Le plateau **C₁** et lesdits moyens de solidarisation **E** sont portés par un bâti 30 fixe. Les moyens de solidarisation **E** comprennent des poinçons chauffants **E₁,** par exemple quatre, permettant la soudure des membranes empilées sur le poste d'empilement **C**, ces moyens de solidarisation **E** sont portés par une embase **32** solidaire d'un coulisseau **34** déplaçable en translation par rapport au bâti **30** de support en regard du plateau **C₁** d'empilement. Pour réaliser la solidarisation, les poinçons chauffants **E₁** sont déplacés jusqu'à venir en contact avec l'empilement de membranes positionné sur le poste d'empilement **C.** On comprend que les poinçons **E₁** réalisent un appui et un chauffage de l'empilement sur la plaque **C₁**. La solidarisation est réalisée entre une membrane renfort **14, 18** et une membrane électrode **12, 20.** En pratique, celle-ci est réalisé en périphérie immédiate de l'ouverture **14a, 18a** d'une membrane renfort **14, 18,** de préférence au niveau des quatre coins de l'ouverture **14a, 18a** qui a une forme rectangulaire.

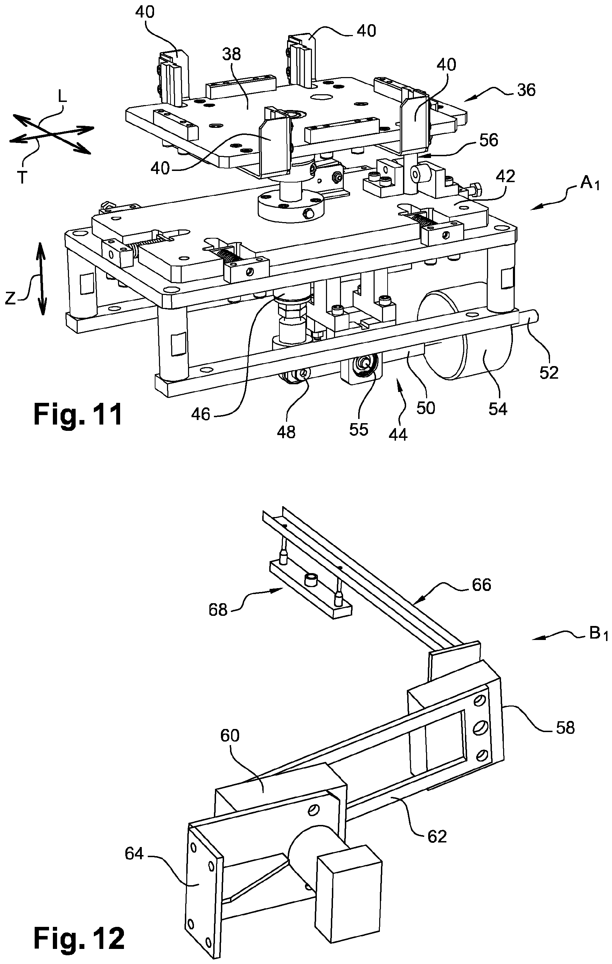

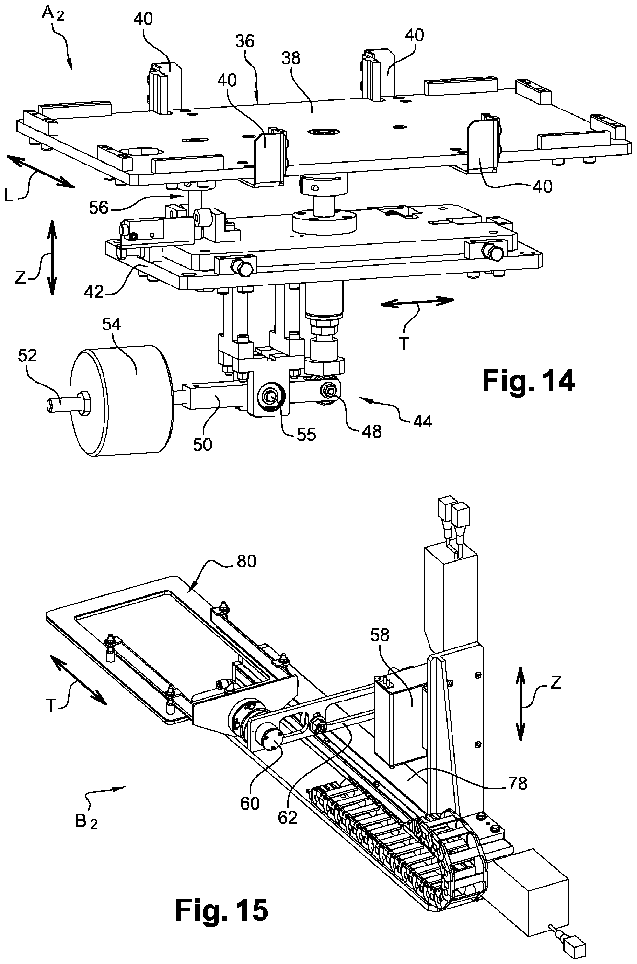

Les figures **11** et **12** représentent le premier poste de stockage **A₁** de membranes électrodes **12, 20** et le premier manipulateur **B₁** des membranes électrodes **12, 20.** Le premier poste de stockage **A₁** comprend un magasin de stockage **36** par empilement de membranes électrodes **12, 20** comprenant un plateau **38** destiné à recevoir un empilement de membranes électrodes **12, 20.** Le bord du plateau **38** est pourvu de moyens de positionnement 40 des membranes électrodes dans une position prédéterminée. Ces moyens de positionnement **40** sont formés par des rebords positionnés au format des électrodes **12, 20.** Le magasin **36** d'électrodes **12, 20** est guidé à déplacement selon une direction donnée verticale **Z** sur un bâti fixe **42** portant des moyens d'amortissement et de rappel **44** du magasin dans une position prédéterminée en l'absence de force d'appui exercée sur le magasin selon ladite direction par le premier manipulateur **B₁.** Pour cela, une tige verticale **46** de liaison relie rigidement à son extrémité supérieure le plateau **38** du magasin **36** et est articulée à rotation à son extrémité inférieure à une première extrémité **48** d'un levier **50** dont une seconde extrémité **52** opposée porte un contrepoids **54.** La première extrémité **48** et la seconde extrémité **52** du levier **50** sont séparées par un pivot **55** solidaire d'un plateau fixe **42.** Comme on peut le remarquer sur la figure **14****,** la tige **46** de liaison traverse le plateau fixe **36** et est guidée à translation verticale dans une ouverture de celui-ci. Ainsi, le plateau **42** fixe est intercalé entre le magasin **36** et le levier **50.**

De préférence, le magasin **36** est également relié au plateau fixe **42** par des moyens **56** additionnels de guidage à translation verticale du magasin permettant de rattraper les erreurs de guidage à translation verticale résultant du coulissement de la tige **46** dans l'ouverture du plateau fixe **42.**

Le premier bras **B1** manipulateur comprend avantageusement une première articulation **58** et une seconde articulation **60** à rotation reliées l'une à l'autre par un segment **62** de liaison. Les deux articulations **58, 60** sont ici articulées à rotation selon des axes parallèles l'un à l'autre et s'étendant dans une direction transverse **T.** La première articulation **58** est montée sur le bâti **64** de l'installation et sur une première extrémité du segment **62** de manière à les articuler relativement l'un à l'autre autour d'un premier axe de rotation. La deuxième articulation **58** est montée sur la seconde extrémité du segment et sur une extrémité d'un support **66** allongée dans une direction parallèle aux axes de rotation et portant des moyens de prise et de pose d'une membrane. Ces moyens de prise et de pose **68** comprennent des moyens de préhension à aspiration comportant avantageusement dans le cas du premier poste des ventouses alignées selon une direction transverse T et reliées à des moyens de fourniture d'une dépression.

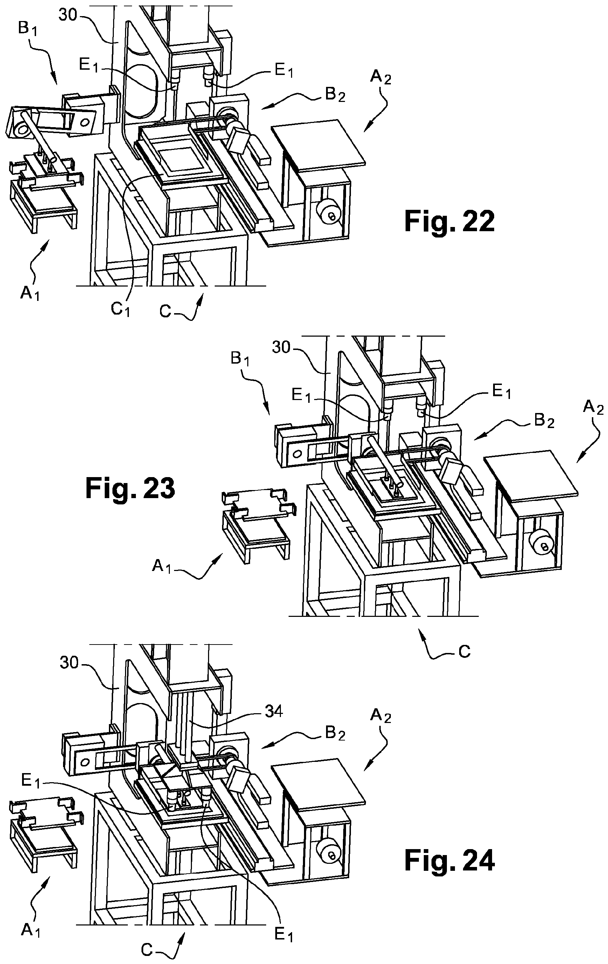

En fonctionnement, le premier manipulateur **B₁** est apte à se déplacer entre une position de prise d'une membrane électrode **12, 20** dans le magasin électrode **36** et une position de pose d'une membrane électrode **12, 20** sur le plateau du poste d'empilement **C.** Avantageusement, une position de pose correspond à une position dans laquelle la membrane électrode **12, 20** est agencée en contact avec le plateau **C₁** ou une autre membrane comme cela apparaitra ultérieurement, les moyens de préhension **68** étant maintenus à l'état actif afin de garantir un maintien de l'électrode. En pratique, le premier manipulateur **B₁** comprend une première position de pose et une seconde position de pose d'une membrane électrode **12, 20** sur le plateau **C₁** du poste d'empilement **C.** Dans la seconde position de pose, le premier manipulateur **B₁** effectue un déplacement d'une membrane électrode **12** depuis le premier poste de stockage **A₁** jusque sur le plateau **C₁** du poste d'empilement **C** sans retournement de la membrane électrode **12.** Dans la première position de pose, le premier manipulateur **B₁** effectue un second déplacement d'une membrane électrode **20** depuis le premier poste **A₁** de stockage jusque sur le plateau **C₁** du poste d'empilement **C** avec un retournement de la membrane électrode **20.** Dans cette première position, le support **66** allongé des ventouses est logé dans l'échancrure **C₂** du plateau **C₁** d'empilement comme représenté en figure **22** et ainsi que cela apparaitra plus clairement en relation avec la description du fonctionnement de l'installation effectuée en référence aux figures **21** à **27****.** Egalement, ce type de mouvement du premier manipulateur **B₁** autorise un simple empilement des membranes électrodes **12, 20** de la même manière dans le premier poste de stockage **A₁,** avec leur première face orientée vers le haut afin qu'elle serve de face de préhension tout en autorisant une orientation de la seconde face portant le catalyseur vers le bas ou vers le haut au niveau du poste d'empilement.

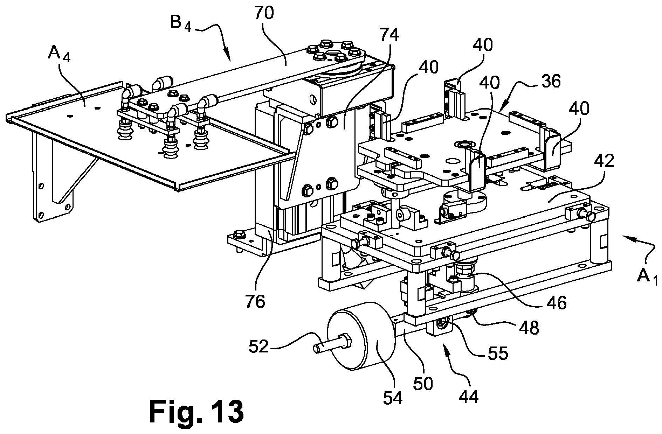

La figure **13** représente le quatrième manipulateur **B₄** comprenant un segment **70** portant à une extrémité des moyens de prise et de pose **72** d'une feuille intercalaire, ces moyens comprenant également des ventouses **72** reliées à des moyens de fourniture d'une dépression. Le segment **70** du quatrième manipulateur **B₄** est articulé à rotation à son extrémité opposée aux ventouses **72** sur un support **74** déplaçable à translation verticalement par rapport au bâti **76** de l'installation. Le quatrième manipulateur **B₄** permet ainsi en fonctionnement une préhension d'une feuille intercalaire et son amenée jusqu'au quatrième poste de stockage **A₄** de membranes intercalaires.

La figure **14** représente le deuxième poste de stockage **A₂** de membranes renfort **14, 18** qui est en tout point similaire au premier poste de stockage **A₁** décrit en référence à la figure 11. Il ne sera pas de nouveau décrit. Le deuxième manipulateur **B₂**, visible en figure 15, comprend également deux articulations **58, 60** en rotation ayant des axes parallèles l'un à l'autre. A la différence du premier manipulateur **B₁**, le second manipulateur **B₂** comprend un moyen **78** de déplacement à translation tel qu'un rail coulissant selon la direction transverse. Egalement, la seconde articulation **60** à rotation porte des moyens de prise et de pose comprenant des moyens de préhension à aspiration qui sont, dans le cas présent, formés d'un cadre rigide **80** comportant une face plane de préhension comportant une pluralité de perforations reliées à des moyens de fourniture d'une dépression. A la différence du premier manipulateur **B₁,** le deuxième manipulateur **B₂** est configuré pour effectuer un mouvement de déplacement d'une membrane ou d'un ensemble de plusieurs membranes solidaires les unes des autres depuis le deuxième poste **A₂** jusque sur le plateau **C₁** du poste d'empilement **C** sans retournement de la membrane ou dudit ensemble de membranes.

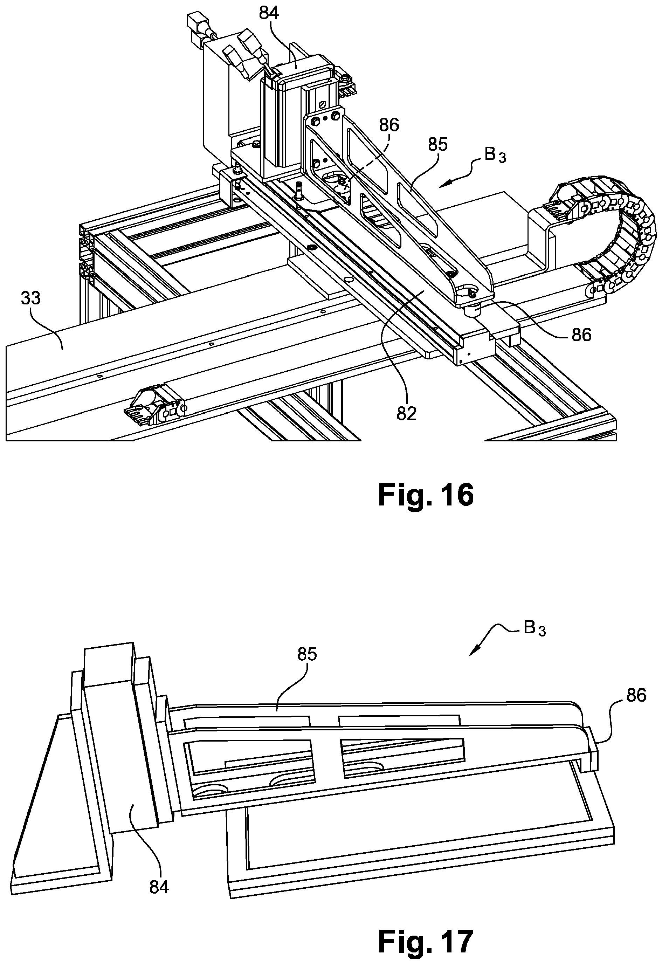

Les figures **16** et **17** représentent le troisième manipulateur **B₃** comprenant un rail **82** de translation transverse lui-même monté à translation sur le rail **33** longitudinal. Le rail transverse **82** portant un rail vertical **84** solidaire d'un support **85** s'étendant en direction transverse. De cette manière, le troisième bras **B₃** peut se déplacer dans les trois directions longitudinale **X,** transverse **T** et vertical **Z** de l'espace. Le support **85** du troisième bras **B₃** porte des moyens de prise et de pose **86** magnétiques comportant des électroaimants actionnés par des moyens de commande de l'installation. Ces moyens de prise et de pose sont aptes à venir saisir un cadre métallique du troisième poste de stockage **A3** pour l'amener sous la première presse **P₁**.

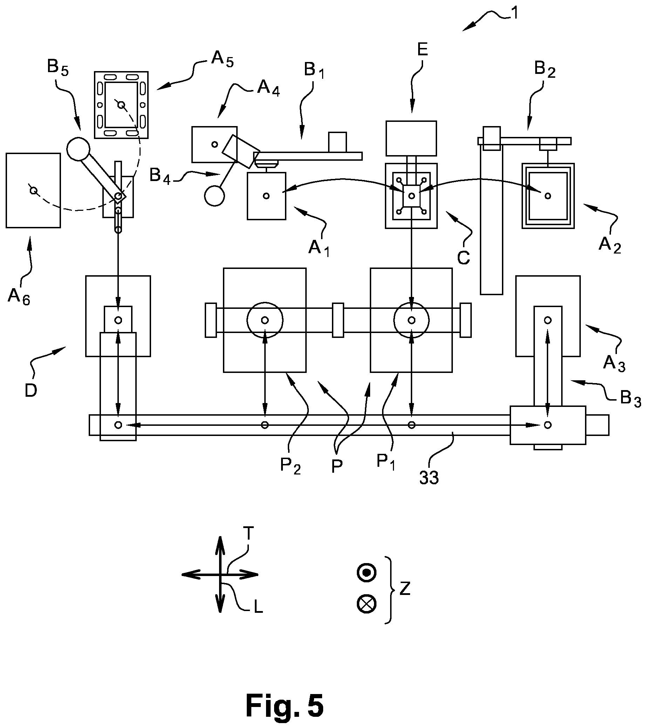

Le cinquième manipulateur **B₅** est représenté en figure 5 et comprend des moyens de prise et de pose comprenant des moyens de préhension par aspiration et des moyens de préhension magnétiques permettant le déplacement d'un cadre métallique, afin de permettre un stockage des assemblages membrane électrolyte polymère - électrodes au niveau du cinquième poste de stockage et des cadres métalliques au niveau du sixième poste.

L'installation **1** selon l'invention est avantageusement utilisable de manière à permettre la production d'un assemblage **10** conforme à la figure **1** ou d'un assemblage **11** conforme à la figure **2****,** selon le mode d'approvisionnement des deuxième et troisième postes.

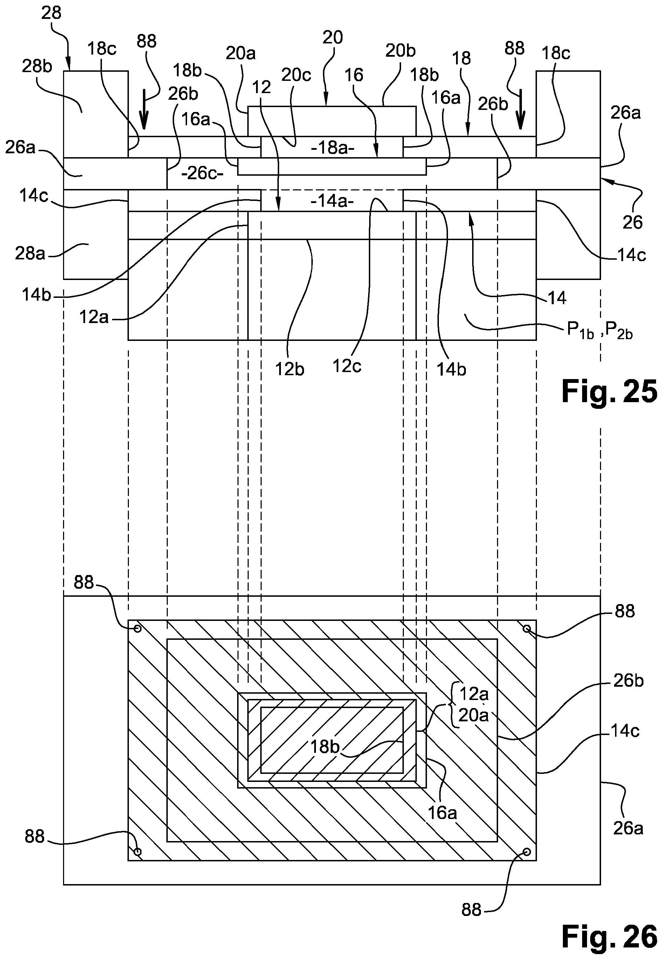

Afin de réaliser l'assemblage **10** décrit en référence à la figure **1****,** le premier poste de stockage, le second poste de stockage et le troisième poste de stockage sont approvisionnés de la manière suivante :
- le premier poste de stockage **A₁** comprend un empilement selon une direction verticale de membranes électrodes **12, 20** dont la première couche de diffusion est agencée vers le haut,
- le deuxième poste de stockage **A2** comprend une alternance de premières membranes renfort **14** comprenant une ouverture **14a** et de secondes membranes renfort **18** comprenant une ouverture **18a,** chaque seconde membrane renfort **18** étant solidaire d'une membrane électrolyte polymère **16** qui obture son ouverture et qui est agencée en vis-à-vis d'une première membrane renfort **12,** la membrane électrolyte polymère **16** étant dimensionnée de manière à ce que son bord externe **16a** soit inscrit entre les bords internes **14b, 18b** et externes des première **14** et seconde **18** membranes de renfort,
- le troisième poste de stockage **A₃** comprend des membranes support **26** comportant un bord externe **26a** et un bord interne **26b** délimitant une ouverture **26c** de la membrane **26,** cette ouverture **26c** étant dimensionnée de manière à ce que la membrane électrolyte polymère **16** puisse s'inscrire dans ladite ouverture **26c** et à ce que la première membrane renfort **14** et la seconde membrane renfort **18** puissent recouvrir tout le bord interne **26b** de la membrane support **26** (figures 25 et 26), chaque membrane support **26** pouvant être serré par son bord externe **26a** entre deux parties **28a, 28b** formant un cadre **28** de maintien de la membrane support **26** et permettant sa manipulation par les moyens de préhension magnétiques **86** du troisième manipulateur **B₃**, au moins l'une des parties **28a, 28b** étant métallique, les deux parties **28a, 28b** pouvant être métalliques.

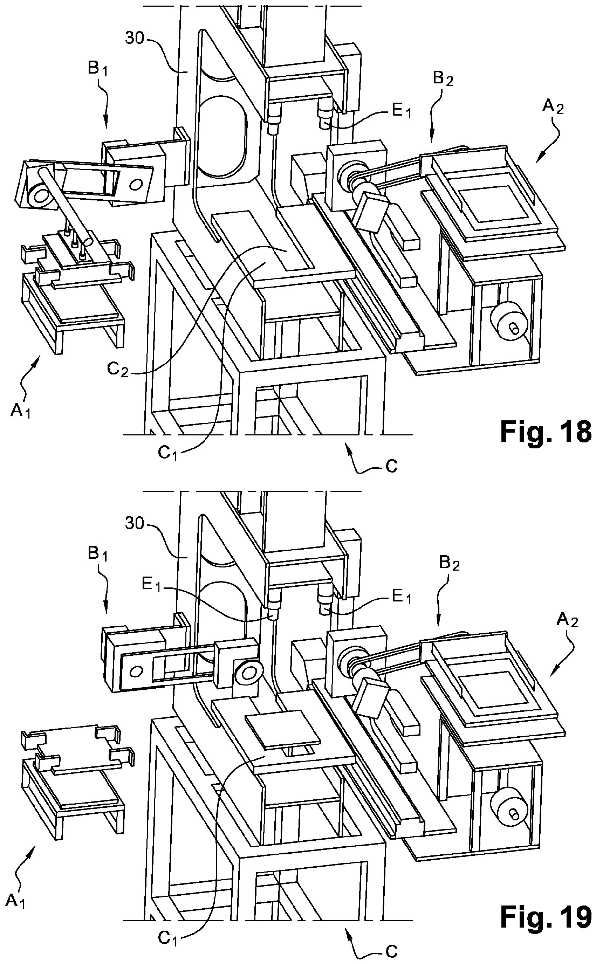

Comme représenté aux figures **18** à **24****,** le premier manipulateur **B₁** est actionné de manière à venir saisir une première électrode **12** par sa couche de diffusion puis à effectuer un positionnement du premier bras **B₁** manipulateur dans sa première position de pose sur le poste d'empilement **C**, la seconde couche de la première électrode **12** étant tournée vers le haut. Dans un second temps, le second manipulateur **B₂** déplace une première membrane renfort **14** seule depuis le deuxième poste de stockage **A₂** jusque sur le poste d'empilement **C** de manière à ce que l'ouverture **14a** de la première membrane renfort **14** soit obturée inférieurement par la première électrode **12.** Dans une troisième étape, on effectue une solidarisation de la première membrane électrode **12** et de la première membrane renfort **14** à l'aide des moyens de solidarisation **E** agencés au niveau du poste d'empilement **C.** On notera que les moyens de préhension à aspiration du premier bras **B₁** et du second manipulateur **B₂** sont maintenus actifs pendant l'étape de solidarisation de sorte que chaque membrane est solidaire de son manipulateur. Dans une quatrième étape, on effectue un déplacement de l'ensemble ainsi formée, du poste d'empilement **C** jusque sur le support de presse **P_{1b}**, à l'aide du second manipulateur **B₂**, les moyens de préhension à aspiration du premier manipulateur **B₁** étant rendus inactifs tandis que les moyens de préhension à aspiration du second manipulateur **B₂** sont maintenus à l'état actif de manière à permettre le déplacement de l'ensemble des deux membranes. Dans une cinquième étape, une membrane support **26** enfermée dans un cadre métallique **28** est amenée, au moyen du troisième manipulateur **B₃**, sur l'ensemble formée de la première électrode **12** et de la première membrane renfort **14,** le bord interne **26b** de la membrane support **26** étant appliqué sur le bord externe **14c** de la première membrane renfort **14.** Dans une sixième étape, on effectue un prélèvement à l'aide du deuxième manipulateur **B₂** d'un ensemble d'une seconde membrane renfort **18** et d'une membrane électrolyte polymère **16,** ces membranes **16, 18** ayant été préalablement solidarisées l'une à l'autre. Cet ensemble est déplacé sur le plateau **C₁** du poste d'empilement **C** dans une septième étape et une seconde électrode **20** est amenée, dans une huitième étape, du premier poste de stockage **A₁** jusqu'au poste d'empilement **C** à l'aide du premier manipulateur **B₁** de manière à ce qu'elle obture supérieurement l'ouverture **18a** du second renfort **18,** le premier manipulateur **B₁** étant dans sa seconde position de pose. On notera que les moyens de préhension à aspiration du premier bras **B₁** et du second manipulateur **B₂** sont maintenus actifs pendant l'étape de solidarisation. Dans une neuvième étape, on effectue une solidarisation de la seconde membrane électrode **20** et de la seconde membrane renfort **18 à** l'aide des moyens de solidarisation **E** agencés au niveau du poste d'empilement **C.** Dans une dixième étape, on effectue un déplacement de l'ensemble ainsi formée du poste d'empilement jusque sous la presse **P₁** de manière à ce que le bord externe de la seconde membrane renfort **18** recouvre tout le bord interne de la membrane support. Cette étape est réalisée à l'aide du second manipulateur **B₂**, les moyens de préhension à aspiration du premier manipulateur **B₁** étant rendus inactifs tandis que les moyens de préhension à aspiration du second manipulateur **B₂** sont maintenus à l'état actif de manière à permettre le déplacement de l'ensemble des membranes. L'ensemble ainsi formé est représenté aux figures **25** et **26****.** Dans une onzième étape, on effectue une opération de pressage, de chauffage et de refroidissement contrôlés de la zone **Z₁** (représentée en hachures pointillés sur la figure **26****)** afin de solidariser les membranes électrodes **12, 20** avec les membranes renforts **14, 18** et éviter tout mouvement relatif des membranes les unes par rapport aux autres. La onzième étape de compression et de chauffage des électrodes peut être suivie d'une étape de solidarisation des membranes renfort **14, 18** par les poinçons chauffants **P_{1d}** par exemple en une pluralité de localisations **88,** par exemple quatre, situées à la périphérie des membranes renforts **14, 18** (figures **25** et **26****).** Cette étape peut également être initiée en fin de cycle de compression et de chauffage et se terminer simultanément ou après celle-ci. Autrement dit, l'étape de solidarisation par poinçons chauffants **P_{1d}** précède l'étape de chauffage et de compression de la zone annulaire **Z₂**. Cette étape de solidarisation évite que la membrane de renfort inférieure **14** ne flambe et ne se replie sur elle-même conduisant à la formation d'une double épaisseur de membrane renfort **14** induisant une mise au rebut de l'assemblage **10** pour non-conformité. Dans une douzième étape, le troisième manipulateur **B₃** déplace l'assemblage **10** sur le support **P_{2b}** de la presse **P₂** et on effectue une opération de pressage, de chauffage et de refroidissement contrôlés de la zone **Z₂** (représentée en hachures en traits pleins sur la figure **26****)** Dans une treizième étape, l'assemblage est déplacé au niveau du poste de découpe afin de réaliser le bord périphérique **22** et les orifices **24** puis on effectue une collecte des assemblages **10** au niveau du cinquième poste **A₅** et des cadres métalliques **28** ainsi que des restes de membranes au niveau du sixième poste **A₆**.

On notera qu'il est possible de réaliser l'assemblage précitée avec la membrane électrolyte polymère solidaire de la première membrane renfort. Dans ce cas, on veillera à ce que la solidarisation de la première membrane renfort **14** et de la première électrode **12** avant dépose sur le support **P_{1b}** de la presse **P₁** se fasse par contact des poinçons chauffants **E₁** avec l'électrode **12** directement et non pas avec la membrane électrolyte polymère **16** pour éviter tout endommagement thermique de celle-ci.

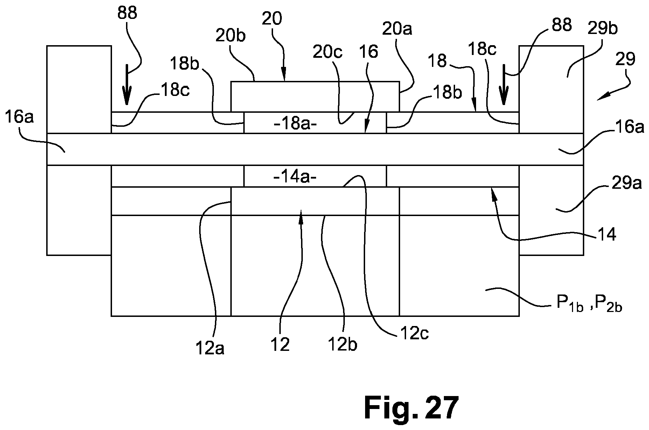

Afin de réaliser l'assemblage **11** décrit en référence à la figure **2****,** le premier poste de stockage, le second poste de stockage et le troisième poste de stockage sont approvisionner de la manière suivante :
- le premier poste de stockage **A₁** comprend un empilement selon une direction verticale de membranes électrodes **12, 20** dont une couche de diffusion est agencée vers le haut,
- le deuxième poste de stockage **A₂** comprend une pluralité de membranes renfort **14, 18** comprenant chacune une ouverture,
- le troisième poste de stockage **A₃** comprend un empilement de membranes support **12** chacune formé par une membrane électrolyte polymère **16** dont le bord externe **16a** est serré entre deux parties **19a, 29b** d'un cadre métallique (figure **27****)** formant un cadre de maintien de la membrane électrolyte polymère **16** et permettant sa manipulation par les moyens de préhension magnétiques **86** du troisième manipulateur **B3**.

Les mêmes étapes une à quatorze que celles décrites précédemment sont effectuées, seule la membrane électrolyte polymère **16** servant de membrane de support.

On remarquera que l'utilisation d'un support 66 allongé pour le premier bras permet de limiter la dimension de l'échancrure **C₂** en U réalisée sur le plateau **C₁.**

Afin d'optimiser la vitesse d'exécution d'un assemblage AME, l'installation comprend des moyens de commande des moyens de convoyage et de manipulation, ces moyens de commande étant configurés pour que le départ d'un empilement du poste d'empilement **C** vers le poste **P** de pressage et de chauffage soit suivi d'une nouvelle étape d'empilement sur le poste d'empilement **C.**

## Revendications

1. Dispositif de manipulation de membranes, en particulier pour pile à combustible, comprenant un poste de stockage de membranes (**A₂**) et des moyens de convoyage et de manipulation d'une membrane **(12)** depuis le poste de stockage (**A₂**) jusque vers un poste de réception **(C)** et les moyens de convoyage et de manipulation comprennent des moyens de préhension à aspiration, **caractérisé en ce que** le poste de stockage (**A₂**) de membranes comprend un magasin de stockage par empilement **(36)** de membranes qui est guidé à déplacement selon une direction donnée **(Z)** sur un bâti fixe portant des moyens d'amortissement et de rappel du magasin (**A₂**) dans une position prédéterminée en l'absence de force d'appui exercée sur le magasin (**A₂**) selon ladite direction par les moyens de préhension à aspiration.

2. Dispositif selon la revendication 1, **caractérisé en ce que** les moyens de préhension à aspiration comprennent un cadre **(80)** comportant une pluralité d'orifices débouchant sur une face plane de préhension du cadre **(80),** ces orifices étant reliés aux moyens de fourniture d'une dépression.

3. Dispositif selon la revendication 1 ou 2, **caractérisé en ce que** les moyens de convoyage et de manipulation comprennent un manipulateur (**B₁**) comprenant un segment de liaison **(62)** de deux articulations à rotation dont l'une porte les moyens de préhension à aspiration.

4. Dispositif selon l'une des revendications 1 à 3, **caractérisé en ce que** les moyens d'amortissement et de rappel comprennent un levier **(50)** dont un point de pivot **(55)** porté par un bâti fixe sépare d'un côté un contrepoids **(54)** et de l'autre côté une tige **(46)** de liaison rigide au magasin **(36)** qui est orientée selon ladite direction **(Z).**

5. Dispositif selon la revendication 4, **caractérisé en ce que** le bâti comprend un plateau fixe **(42)** comportant une ouverture dans laquelle la tige de liaison est guidée à déplacement selon ladite direction **(Z)** et **en ce que** le plateau **(42)** est intercalé selon ladite direction **(Z)** entre le magasin **(36)** et le levier **(50).**

6. Dispositif selon la revendication 5, **caractérisé en ce qu'**il comprend des moyens de guidage auxiliaire à déplacement selon ladite direction du magasin **(36)** sur le plateau **(38).**

## Patentansprüche

1. Vorrichtung zur Handhabung von Membranen, insbesondere für Brennstoffzellen, mit einer Membranlagerstation (A₂) und Mitteln zum Fördern und Handhaben einer Membran (12) von der Lagerstation (A₂) bis zu einer Aufnahmestation (C), wobei die Förder- und Handhabungsmittel Sauggreifmittel enthalten,
**dadurch gekennzeichnet, dass** die Membranlagerstation (A₂) ein Stapellagermagazin (36) für Membranen enthält, das in einer gegebenen Richtung (Z) auf einem ortsfesten Gestell verstellbar geführt ist, welches Mittel zur Dämpfung und Rückstellung des Magazins (A₂) in eine vorbestimmte Position bei Ausbleiben einer auf das Magazin (A₂) in der genannten Richtung durch die Sauggreifmittel ausgeübten Auflagekraft trägt.

2. Vorrichtung nach Anspruch 1, **dadurch gekennzeichnet, dass** die Sauggreifmittel einen Rahmen (80) mit einer Vielzahl von Öffnungen enthalten, die in eine ebene Greiffläche des Rahmens (80) münden, wobei diese Öffnungen mit Mitteln zur Bereitstellung von Unterdruck verbunden sind.

3. Vorrichtung nach Anspruch 1 oder 2, **dadurch gekennzeichnet, dass** die Förder- und Handhabungsmittel einen Manipulator (B₁) mit einem Verbindungssegment (62) zum Verbinden von zwei Drehgelenken, von denen eines die Sauggreifmittel trägt, enthalten.

4. Vorrichtung nach einem der Ansprüche 1 bis 3, **dadurch gekennzeichnet, dass** die Dämpfungs- und Rückstellmittel einen Hebel (50) enthalten, dessen von einem ortsfesten Gestell getragener Schwenkpunkt (55) auf der einen Seite ein Gegengewicht (54) und auf der anderen Seite eine Stange (46) zur starren Verbindung mit dem Magazin (36) trennt, die in der genannten Richtung (Z) ausgerichtet ist.

5. Vorrichtung nach Anspruch 4, **dadurch gekennzeichnet, dass** das Gestell eine ortsfeste Platte (42) mit einer Öffnung enthält, in der die Verbindungsstange in der genannten Richtung (Z) verstellbar geführt ist, und dass die Platte (42) in der genannten Richtung (Z) zwischen dem Magazin (36) und dem Hebel (50) eingefügt ist.

6. Vorrichtung nach Anspruch 5, **dadurch gekennzeichnet, dass** sie Hilfsführungsmittel zum Verstellen des Magazins (36) in der genannten Richtung auf der Platte (38) enthält.

## Claims

1. A device for handling membranes, in particular for fuel cells, comprising a membrane storage station (**A₂**)and means for conveying and handling a membrane **(12)** from the storage station (**A₂**) to a receiving station **(C)** and the conveying and handling means comprise suction gripping means, **characterized in that** the membrane storage station (**A₂**) comprises a membrane stacking storage magazine **(C)** which is guided to move in a given direction **(Z)** on a stationary frame carrying means for damping and returning the magazine (**A₂**) to a predetermined position in the absence of a supporting force exerted on the magazine (**A₂**) in said direction by the suction gripping means.

2. A device according to claim 1, **characterized in that** the suction gripping means **(80)** comprise a frame provided with a plurality of holes leading to a flat gripping face of the frame **(80),** these holes being connected to vacuum supply means.

3. A device according to claim 1 or 2, **characterized in that** the conveying and handling means comprise a manipulator(**B₁**) comprising a connecting segment **(62)** of two rotating joints, one of which carries the suction gripping means.

4. A device according to one of claims 1 to 3, **characterized in that** the damping and return means comprise a lever **(50),** a pivot point **(55)** of which, supported by a stationary frame, separates a counterweight **(54)** on one side and a rod **(46)** for rigid connection to the magazine **(36)** on the other side, which is oriented in said direction **(Z).**

5. A device according to claim 4, **characterized in that** the frame comprises a stationary plate **(42)** having an opening in which the connecting rod is guided to move in said direction **(Z)** and **in that** the plate **(42)** is interposed in said direction **(Z)** between the magazine **(36)** and the lever **(50).**

6. A device according to claim 5, **characterized in that** it comprises auxiliary guide means movable in said direction of the magazine **(36)** on the plate **(38).**
